# EUROPEAN PATENT APPLICATION

(11) **EP 2 892 141 A1**
(43) Date of publication of application: **08.07.2015**
(21) Application number: 15150210.1
(22) Date of filing: 06.01.2015
(51) Int. Cl.: H02M 3/335, H02M 1/00

(54) **Power converter with modulated secondary-side synchronous rectification**

(30) Priority: 06.01.2014 US 201461923869 P
(71) Applicant: Bel Fuse (Macao Commercial Offshore) Ltd. (MCO), 13 Andar H-K (MO)
(72) Inventor: Zheng, Yanli, 310053 Hangzhou (CN); Deng, Jia, 310053 Hangzhou (CN); Zhou, Yuanping, 310053 Hangzhou (CN)
(74) Representative: Driver, Virginia Rozanne

(57) **Abstract**

A power converter includes a power transformer, primary-side circuitry connected between a power source and a primary coil, and secondary-side circuitry connected between secondary coil(s) and a load to generate an output voltage and load current for a load. The secondary-side circuitry includes (i) an output inductor, (ii) one or more power transistors, and (iii) control circuitry generating switching signals to operate the power transistors as synchronous rectifiers. The control circuitry (a) senses an inductor current in the output inductor, and (b) selectively disables the switching signals to the power transistors when the inductor current is less than a threshold current value in a range between a minimally negative value and a minimally positive value, the minimally negative value just preventing diode rectification mode of operation of the power transistors, the minimally positive value just preventing negative inductor current in the output inductor.

## Description

### BACKGROUND

With the development of power electronics, switch-mode power supplies (SMPS) have become been widely used in many kinds of electronic equipment for their small size, light weight, and high efficiency. A DC/DC power converter is one kind of SMPS used in communication, equipment control and other application fields.

Saving energy has become important to governments around the world. Electrical devices such as SMPS are rated for their energy efficiency.

Previously the focus of energy consumption of SMPS was with respect to their efficiency at heavy load or full load, without concern for the power loss at light load or no load. However, there are now standards for power loss at lower loads, such as during standby operation. Thus SMPS are facing the double challenge of decreasing loss at light load or no load and optimizing efficiency at heavy load or full load.

Another aspect of SMPS is the use of parallel-connected SMPS for higher power applications. In a parallel-connected system, each converter provides only a part of the total output power, so each SMPS can have reduced stress. Also, a set of converters can provide N+M redundancy, so that if one or more parallel-connected converters fail, the overall set can still output 100% of rated power. Other benefits includes the ability to hot swap converters, and the ability to design to different power levels with low design cost. However, connecting a set of SMPS in parallel also presents challenges. If parallel-connected SMPS have different set points, then one SMPS may sink current, and if the sink current is excessive then the SMPS may be damaged or overstressed and thus have a shortened lifetime.

### SUMMARY

With the requirements of low power consumption, high efficiency and parallel-connected application, power converters face challenges. The present disclosure is directed to techniques for addressing these challenges. In particular, the disclosure is directed to secondary-side rectification circuitry of a power converter that provides for improved efficiency especially at light load and no load, along with minimization of undesirable current sinking and/or inefficient rectification modes of operating.

A disclosed power converter employs synchronous rectification mode, providing high efficiency when operating under heavy load or full load. Under light load or no load, the synchronous rectification is modulated to limit or avoid negative output current and thus improve efficiency in these conditions. Modulation occurs when a sensed level of current in an output inductor is less than a predetermined current threshold at or near zero. The exact threshold can be set slightly above or below zero volts in different applications to achieve desired characteristics. By using a slightly positive threshold, negative output current can be avoided. If a small amount of negative output current can be tolerated, then a slightly negative threshold can be used to limit or avoid an inefficient diode rectification mode that can occur by action of a parasitic body diode of the secondary-side power transistors. Overall efficiency in light load and no load conditions can be increased.

More specifically, a power converter is disclosed that includes a power transformer, primary-side circuitry connected between a power source and a primary coil, and secondary-side circuitry connected between secondary coil(s) and a load to generate an output voltage and load current for a load. The secondary-side circuitry includes (i) an output inductor, (ii) one or more power transistors, and (iii) control circuitry generating switching signals to operate the power transistors as synchronous rectifiers. The control circuitry (a) senses an inductor current in the output inductor, and (b) selectively disables the switching signals to the power transistors when the inductor current is less than a threshold current value in a range between a minimally negative value and a minimally positive value, the minimally negative value just preventing diode rectification mode of operation of the power transistors, the minimally positive value just preventing negative inductor current in the output inductor. The switching signals are effectively modulated in a manner that limits or avoids negative current and/or diode rectification mode, increasing efficiency at light load and no load.

### BRIEF DESCRIPTION OF THE DRAWINGS

The foregoing and other objects, features and advantages will be apparent from the following description of particular embodiments of the invention, as illustrated in the accompanying drawings in which like reference characters refer to the same parts throughout the different views.
Figure 1 is a schematic diagram of a converter using half-wave diode rectification;
Figure 2 is a waveform diagram of signals in the converter of Figure 1;
Figures 3A and 3B are schematic diagrams of converters using synchronous rectification;
Figure 4 is a schematic diagram of a converter using modulated secondary-side synchronous rectification;
Figure 5 is a schematic diagram of analog modulation control circuitry;
Figures 6A and 6B are schematic diagrams of a pulse width modulator (PWM) generator;
Figure 7 is a schematic diagram of a converter using modulated secondary-side synchronous rectification with analog modulation control;
Figure 8 is a schematic diagram of digital modulation control circuitry;
Figure 9 is a flow diagram of operation of digital modulation control circuitry;
Figures 10A through 13B are waveform diagrams of operation of converters using modulated secondary-side synchronous rectification under different operating conditions;
Figures 14A through 14C are schematic diagrams of converters using modulated secondary-side synchronous rectification.

### DETAILED DESCRIPTION

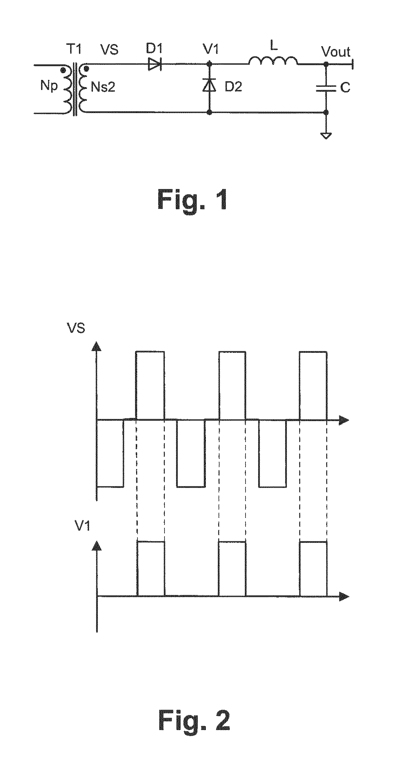

Figures 1, 2, 3A and 3B illustrate two broad classes or types of rectification used at a secondary side of an isolated converter, diode rectification and synchronous rectification.

Figure 1 shows the secondary side of a power converter that provides half-wave diode rectification using a rectifying diode D1 along with output filtering elements L and C. When the output of the main transformer T1 is a high level, the rectifier diode D1 turns on, and the output of diode negative pin (voltage V1) is a high level. When the secondary side output of the main transformer T1 is a low level, the rectifying diode D1 turns off, and the output of the diode negative pin is zero. Figure 2 shows the waveforms for the transformer secondary voltage VS and the voltage V1. In this kind of circuit, rectification conduction loss is proportional to the product of the forward conduction voltage across D1 and the forward conduction current flowing through D 1. Thus, diode rectification is not optimized for converter efficiency in heavy load or full load.

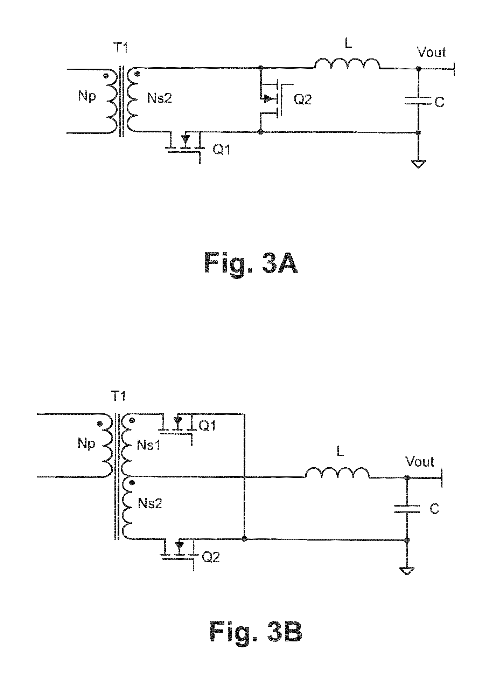

Figures 3A and 3B illustrate an alternative rectification technique referred to as "synchronous rectification". In synchronous rectification, power MOSFETs Q1, Q2 replace the rectification diode(s) at the secondary side of the isolated converter, thus providing high efficiency especially in low-output-voltage and high-current power supplies. Synchronous rectification technology is increasing the DC/DC converter efficiency. A power MOSFET is a voltage controlled component, and when the power MOSFET turns on, the its voltage-ampere characteristic is linear. When using a power MOSFET as a rectifier, the AC gate voltage must be synchronous with the AC rectified voltage, hence the name "synchronous rectifier".

Synchronous rectification circuits are shown in Figures 3A and 3B. Figure 3A is a half-wave rectification circuit, and Figure 3B is a full-wave rectification circuit. In both these circuits, Q1 and Q2 are power MOSFETs. In the circuit of Figure 3A, when the secondary side output voltage of the main transformer T1 is high level, Q1 turns on and Q2 turns off. Q1 has the function of rectification. When the secondary side output voltage of the main transformer T1 is low level, Q1 turns off and Q2 turns on. Q2 has the function of free wheeling. The power consumption of the synchronous rectification circuit is mainly the conduction loss and switching loss. When the switching frequency is lower, the conduction loss is the main power loss. When the switching frequency is higher, the switching loss is the main power loss. It is effective to optimize the power loss of MOSFET by selecting a suitable switching frequency.

Compared with diode rectification, synchronous rectification has lower conduction loss, and it has higher efficiency in heavy load. But in light load or no load, the conduction loss and the switching loss for synchronous rectification are relatively higher. So synchronous rectification mode may be limited in its ability to decrease power loss in light load or no load.

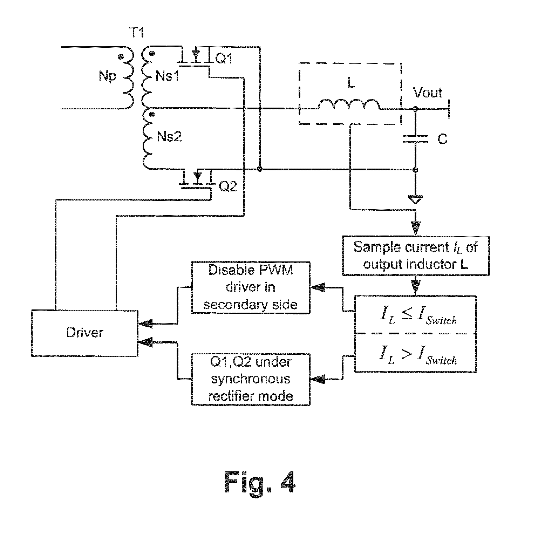

Figure 4 shows a converter circuit that uses simulated diode rectification in light load or no load, and synchronous rectification in heavy load or full load, thus decreasing power loss in light load or no load and increasing the efficiency in heavy load or full load. These two modes of operating are referred to herein as "diode rectification mode" and "synchronous rectification mode". The dividing line between the two modes is based on the level of output current, i.e., the level of current I_{L} in the inductor L. Usually, when a converter is operating in light load or no load, the output inductor current I_{L} may become negative. And when the converter is operating in heavy load or full load, the output inductor current I_{L} is positive. Thus the level of the inductor current I_{L} can be sensed and used to select the operating mode.

Specifically, the circuit samples the inductor current *I_{L},* and it compares *I_{L}* with a predetermined inductor current switching point *I_{Switch}.* When *I_{L}* > *I_{Switch}*, Q1 and Q2 are operated in normal synchronous rectification mode. When *I_{L}* <*I_{Switch},* both Q1 and Q2 are disabled (turned off), and the circuit operates in diode rectification mode via parasitic body diodes of Q1 and Q2. Through sensing the inductor current I_{L}, the falling edge of the switching of the secondary side MOSFETs Q1, Q2 is modulated to decrease the root mean square (RMS) value of the inductor current I_{L}, which is effective to lower the loss in light load or no load.

There are two major ways to realize secondary side MOSFET modulation mode, i.e., an analog way and a digital way. Using the analog way, modulation can be achieved by (1) enabling and disabling a secondary side driver based on output inductor current, or (2) enabling and disabling a secondary side pulse-wide modulator (PWM) controller based on output inductor current.

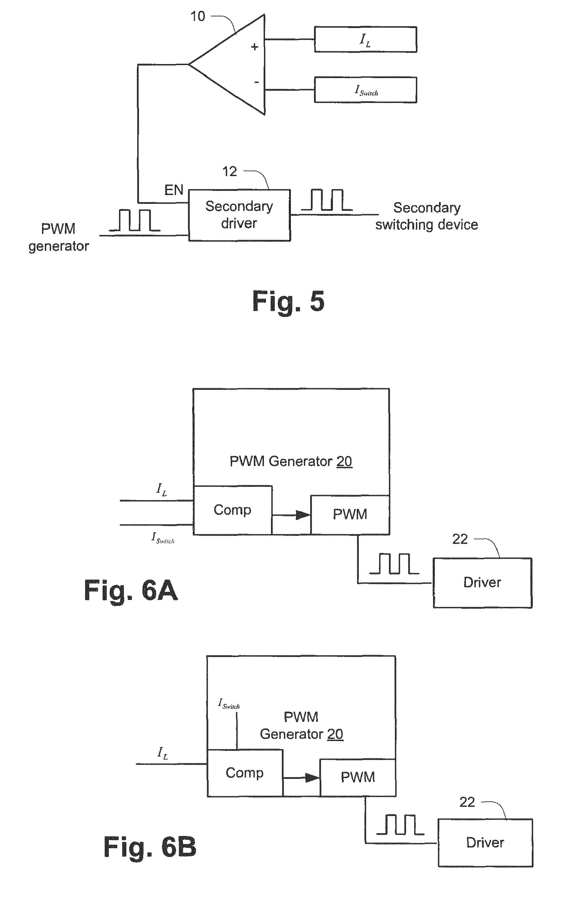

Figure 5 shows a circuit providing secondary side MOSFET modulation by enabling a secondary side driver 12. Specifically, a comparator 10 compares the inductor current I_{L} with the threshold current I_{Switch}, and when I_{L} < I_{Switch}, a comparator output signal EN switches to a zero value. This comparator output EN drives an enable pin of a secondary side driver 12 that generates the gate drive signals for the secondary side switching devices (e.g., Q1, Q2 in Figure 4). The secondary side switching devices turn off synchronized with output inductor current I_{L}.

Figures 6A and 6B show the secondary side MOSFET modulation mode realized by the peripherals of a PWM controller integrated circuit (PWM generator IC) 20, which can be either an analog IC or a digital IC. The comparator Comp of the PWM controller IC 20 can reset the output pin of a secondary side PWM to realize modulation of the secondary side MOSFET falling edge from driver 22. Figure 6A uses an external reference I_{switch} for the comparator Comp, while Figure 6B uses an internal reference.

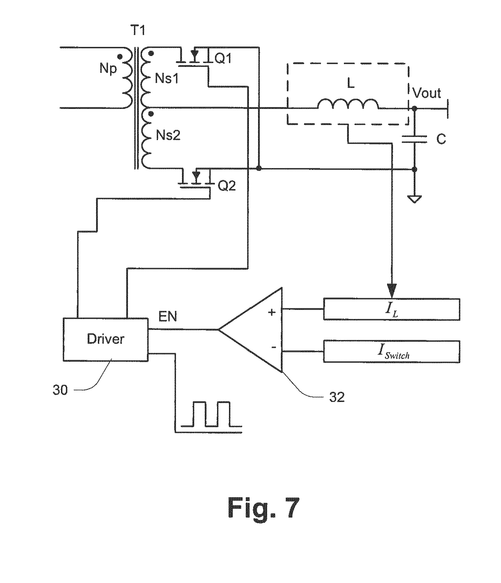

Figure 7 illustrates enabling and disabling a secondary side driver 30 based on the level of inductor current I_{L}. When *I_{L}* > *I_{Switch}*, the output of a comparator 32 is high. The secondary side driver 30 is enabled, so Q1 and Q2 (Figure 4) operate in normal synchronous rectification mode. When *I_{L} <I_{Switch},* the output of the comparator 32 is low. The secondary side driver 30 is disabled, so both Q1 and Q2 are disabled.

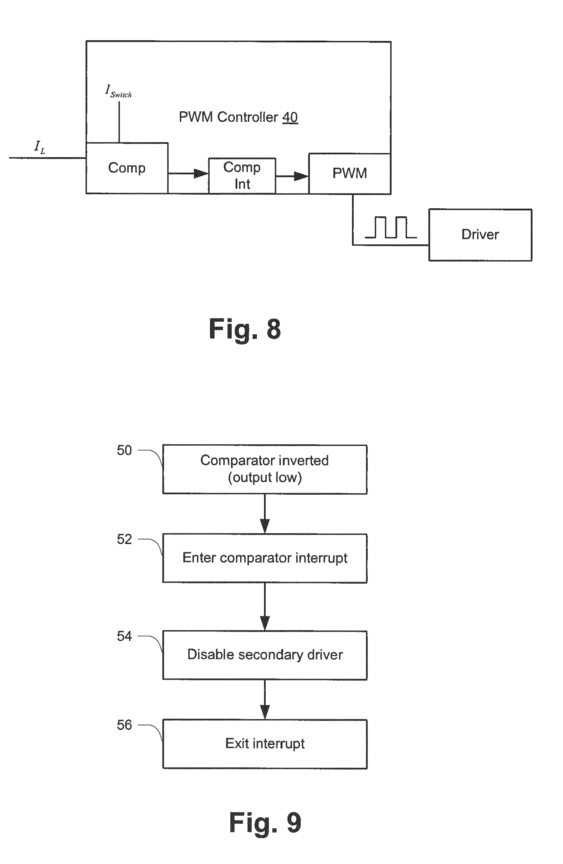

Figure 8 is a block diagram of secondary-side synchronous rectification modulation in a digital way, using a PWM controller IC 40. Figure 9 illustrates operation. A comparator Comp compares the inductor current I_{L} with the threshold current I_{Switch}, and when I_{L} < I_{Switch} a comparator interrupt is generated (step 50 in Figure 9). A comparator interrupt routine Comp Int is then entered (step 52), and this routine disables the secondary side PWM for the remaining of the PWM period (step 54), similar to the analog way. The interrupt routine is then exited (step 56). The threshold I_{Switch} can be provided by an external reference or an internal reference.

Compared to the analog way, the digital way to realize the secondary side PWM turning off synchronously may have a little delay. But it can still realize the function of turning off the secondary side PWM synchronously.

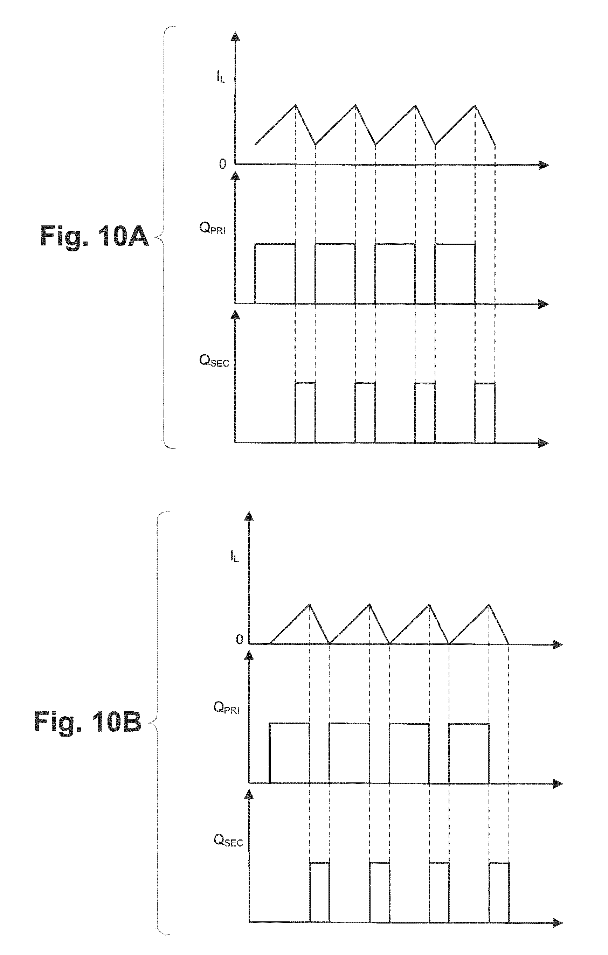

Figure 10A-10C, 11A-11C, and 12A-12C illustrate operation under different loading conditions when different values of the threshold inductor current I_{Switch} are used. By setting I_{Switch} appropriately, the secondary side synchronous rectification modulation method can meet different requirements. These figures illustrate a series of cycles of a PWM signal used to control conduction of primary-side transistors (Q_{PRI}) and second-side transistors (Q_{SEC}).

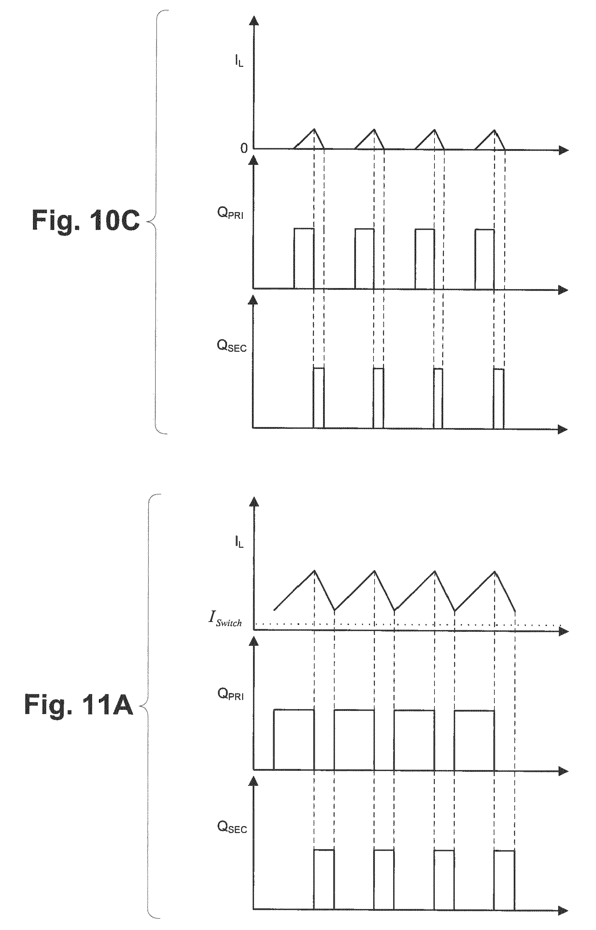

Figures 10A, 10B and 10C show operation when *I_{Switch}* = 0.

Figure 10A shows heavy or full load operation in which the minimum of *I_{L}* is greater than *I_{Switch}*. In this case the output inductor current *I_{L}* is continuous, and the converter works in continuous conduction mode (CCM).

Figure 10B shows intermediate-load operation in which the minimum of *I_{L}* is equal to *I_{Switch}.* In this case the output inductor current *I_{L}* is boundary continuous, and the converter works in the boundary conduction mode (BCM).

Figure 10C shows light or no-load operation in which the minimum of *I_{L}* is less than *I_{Switch}.* In this case the output inductor current *I_{L}* is discontinuous, and the converter works in the discontinuous conduction mode (DCM).

Figures 10A - 10C illustrate that selecting *I_{Switch}* = 0 can help avoid current "sinking", i.e., current flowing into the converter from a load, and thus this selection can be beneficial when converters are arranged in parallel and/or require robust pre-bias startup. Meanwhile, efficiency in full load is not affected. Due to avoiding the negative current, the RMS value of inductor current is decreased, and the power loss is lower in light load and no load.

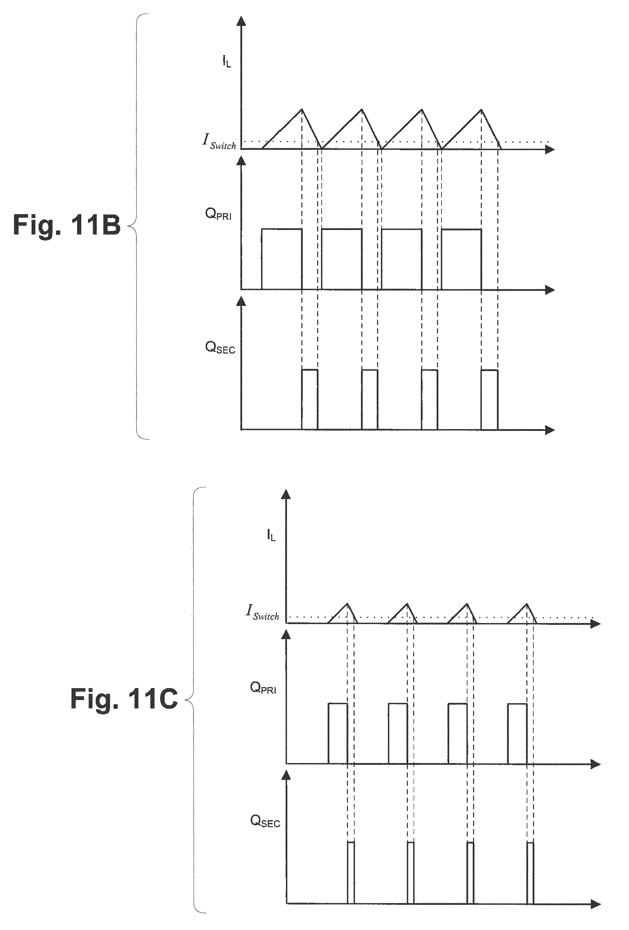

Figures 11A, 11B and 11C show operation when *I_{Switch} >* 0.

Figure 11A shows that under the condition of the minimum of *I_{L}* being greater than or equal to *I_{Switch},* the output inductor current *I_{L}* is continuous. The converter works in CCM and it is in heavy load.

Figure 11B shows that under the condition of the minimum of *I_{L}* being less than *I_{Switch}* but nonnegative (*I_{L}* ≥ 0), the output inductor current *I_{L}* is boundary continuous. During the periods when *I_{L} < I_{Switch}*, the converter is under diode rectification. The converter works in BCM and it is with intermediate load.

Figure 11C shows that under the condition of the minimum of *I_{L}* being less than zero, the output inductor current *I_{L}* is discontinuous. During the periods when 0 < *I_{L}* < *I_{Switch},* the converter is under diode rectification mode. The converter works in DCM and it is in light load or no load.

Therefore, selecting *I_{Switch}* > 0 is better to avoid the sink current, thus realizing converters in parallel and pre-bias start well. When *I_{Switch}* is close to zero, it does not affect the efficiency in full load. If *I_{Switch}* is higher, the converter will have a longer time working under diode rectification mode (0 < *I_{L}* < *I_{Switch}*), and thus lower efficiency in heavy load or full load. Otherwise, due to avoiding the negative current, the RMS value of inductor current is decreased, and the power loss is lower in light load and no load.

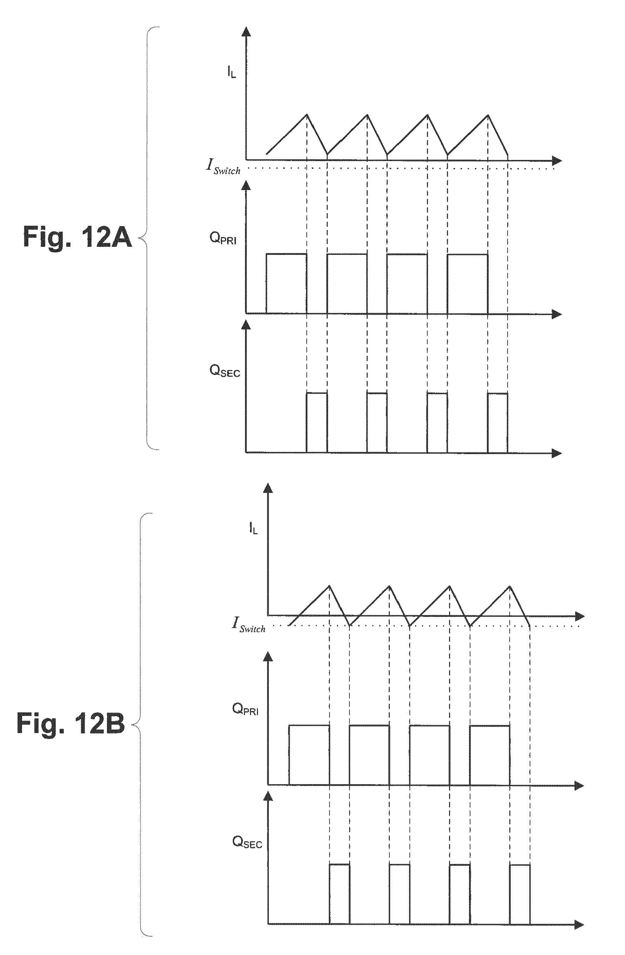

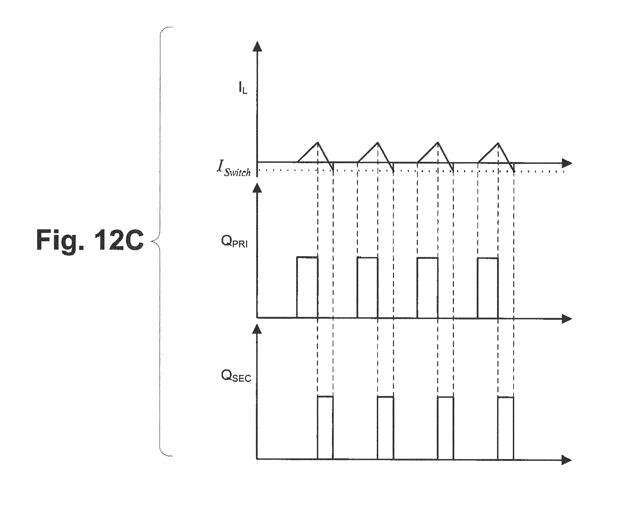

Figures 12A, 12B and 12C show operation when *I_{Switch} <* 0.

Figure 12A shows that under the condition of the minimum of *I_{L}* being greater than or equal to *I_{Switch},* the output inductor current *I_{L}* is continuous. The converter works in CCM and it is in any load.

Figure 12B shows that under the condition of the minimum of *I_{L}* being equal to *I_{Switch},* the output inductor current *I_{L}* is boundary continuous. The converter works in BCM and it is in any load.

Figure 12C shows that under the condition of the minimum of *I_{L}* being less than *I_{Switch},* the output inductor current *I_{L}* is discontinuous. The converter works in DCM and it is in light load or no load.

Therefore, selecting *I_{Switch}* < 0 is better to avoid the diode rectification mode. When *I_{Switch}* is close to zero, there is little or no sink current, thus realizing converters in parallel and pre-bias start well. When I_{L} approaches I_{Switch}, the secondary side MOSFETs have overstress issues at the moment of turning off the MOSFETs for the inductor current I_{L} changing from negative value to zero suddenly. Otherwise, due to the negative current, the RMS value of inductor current I_{L} is not decreased obviously, and the power loss is still high in light load and no load.

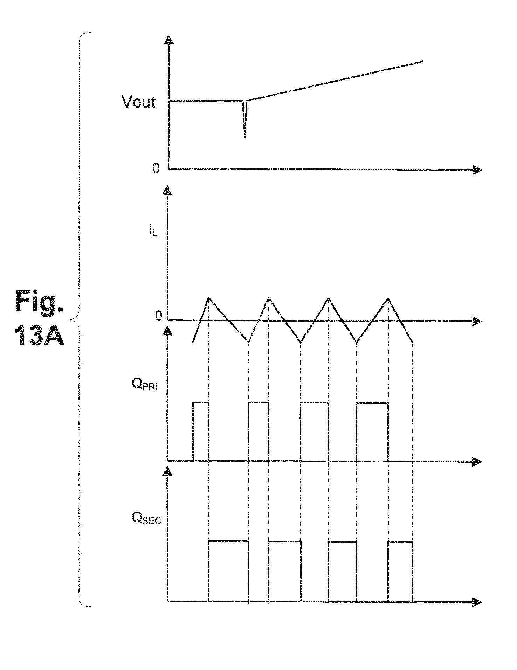

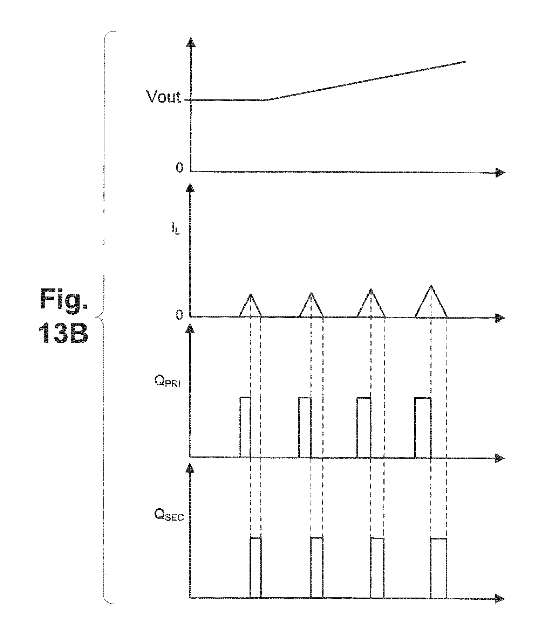

As shown above, the value of I_{Switch} should be selected close to 0. Selecting I_{Switch} < 0 is better to avoid the diode rectification mode. Selecting I_{Switch} > 0 is better to avoid negative current and stress issues. The secondary side synchronous rectification modulation method improves paralleling of converters and pre-bias start. This can be appreciated by comparing Figures 13A and 13B, which show that for conditions in which a first output set point of the converter is lower than the pre-bias voltage there are the different waves between synchronous rectification mode and synchronous rectification modulation mode. Figure 13A shows conventional synchronous rectification mode, and it is clear that the converter has negative current. Figure 13B shows synchronous rectification modulation mode as described herein, and the converter has no negative current.

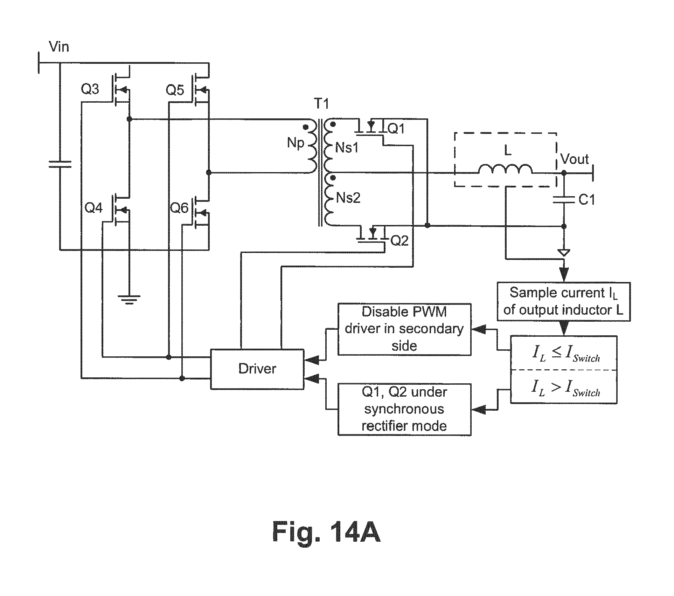

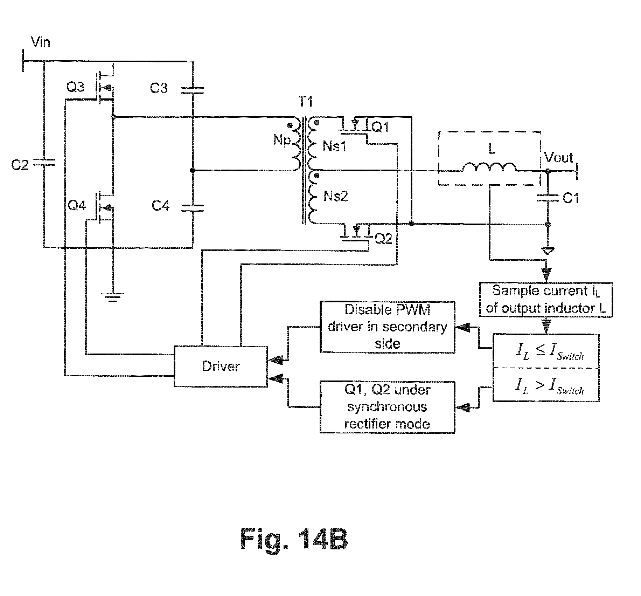

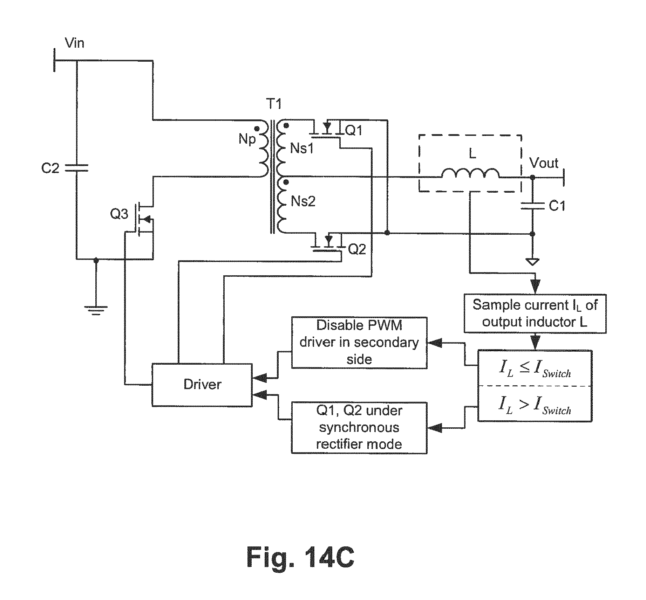

The synchronous rectification modulation method of this invention can be used in various isolated DC/DC topologies. Figures 14A, 14B and 14C illustrate use of the secondary side synchronous rectification modulation in different converter topologies. Figure 14A shows a full-bridge topology. Figure 14B shows a half-bridge topology. Figure 14C shows a forward topology.

While various embodiments of the invention have been particularly shown and described, it will be understood by those skilled in the art that various changes in form and details may be made therein without departing from the spirit and scope of the invention as defined by the appended claims.

## Claims

1. A power converter, comprising:
a power transformer having a primary coil and one or more secondary coils;
primary-side circuitry connected between a power source and the primary coil; and
secondary-side circuitry connected between the secondary coils and a load to generate an output voltage and load current for the load, the secondary-side circuitry including (i) an output inductor, (ii) one or more power transistors, and (iii) control circuitry generating switching signals to operate the power transistors as synchronous rectifiers, the control circuitry being configured and operative to (a) sense an inductor current in the output inductor, and (b) selectively disable the switching signals to the power transistors when the inductor current is less than a threshold current value, the threshold current value being in a range between a minimally negative value and a minimally positive value, the minimally negative value just preventing diode rectification mode of operation of the power transistors, the minimally positive value just preventing negative inductor current in the output inductor.

2. A power converter according to claim 1, wherein the control circuitry includes a comparator, a pulse width modulation (PWM) generator and a driver, the PWM generator generating a PWM signal provided to the driver to generate a drive signal for a corresponding power transistor, the comparator generating an enable signal based on a difference between the inductor current and the threshold current value, the enable signal being used to selectively disable the drive signal.

3. A power converter according to claim 2, wherein the driver has an enable input, and wherein the enable signal is provided to the enable input to selectively disable the driver separate from operation of the PWM generator.

4. A power converter according to claim 2, wherein the PWM generator has an enable input, and wherein the enable signal is provided to the enable input to selectively disable the PWM generator separate from the driver.

5. A power converter according to claim 1, wherein the control circuitry includes a digital controller generating a PWM signal provided to a driver to generate a drive signal for a corresponding power transistor, the digital controller including computer program instructions of a comparator interrupt executed when the inductor current falls below the threshold current value, the comparator interrupt disabling the PWM signal.

6. A power converter according to claim 1, wherein the threshold current value is the minimally negative value and the power converter has three operating modes depending on a minimum instantaneous value of the inductor current in each cycle of the PWM signal, the three operating modes including:
a first mode when the minimum instantaneous value of the inductor current is greater than the threshold current value, the first mode being a continuous conduction mode in which positive inductor current flows throughout each cycle of the PWM signal and diode rectification operation of the power transistors does not occur;
a second mode when the minimum instantaneous value of the inductor current is equal to the threshold current value, the second mode being a boundary continuous conduction mode in which negative inductor current flows for a portion of each cycle of the PWM signal and diode rectification operation of the power transistors does not occur; and
a third mode when the minimum instantaneous value of the inductor current is less than the threshold current value, the third mode being a discontinuous conduction mode in which zero inductor current flows for a portion of each cycle of the PWM signal and diode rectification operation of the power transistors does not occur.

7. A power converter according to claim 1, wherein the threshold current value is zero and the power converter has three operating modes depending on a minimum instantaneous value of the inductor current in each cycle of the PWM signal, the three operating modes including:
a first mode when the minimum instantaneous value of the inductor current is greater than the threshold current value, the first mode being a continuous conduction mode in which positive inductor current flows throughout each cycle of the PWM signal and diode rectification operation of the power transistors does not occur;
a second mode when the minimum instantaneous value of the inductor current is equal to the threshold current value, the second mode being a boundary continuous conduction mode in which the minimum instantaneous value of the inductor current is zero and diode rectification operation of the power transistors does not occur; and
a third mode when the minimum instantaneous value of the inductor current is less than the threshold current value, the third mode being a discontinuous conduction mode in which zero inductor current flows for a portion of each cycle of the PWM signal and diode rectification operation of the power transistors does not occur.

8. A power converter according to claim 1, wherein the threshold current value is the minimally positive value and the power converter has three operating modes depending on a minimum instantaneous value of the inductor current in each cycle of the PWM signal, the three operating modes including:
a first mode when the minimum instantaneous value of the inductor current is greater than the threshold current value, the first mode being a continuous conduction mode in which positive inductor current flows throughout each cycle of the PWM signal and diode rectification operation of the power transistors does not occur;
a second mode when the minimum instantaneous value of the inductor current is between zero and the threshold current value, the second mode being a boundary continuous conduction mode in which positive inductor current flows throughout each cycle of the PWM signal and diode rectification operation of the power transistors occurs when the inductor current is less than the threshold current value; and
a third mode when the minimum instantaneous value of the inductor current is less than zero, the third mode being a discontinuous conduction mode in which zero inductor current flows for a portion of each cycle of the PWM signal and diode rectification operation of the power transistors occurs when the inductor current is between zero and the threshold current value.

9. A power converter according to claim 1, arranged as a full-bridge converter in which the primary-side circuitry includes four power transistors in full-bridge arrangement to provide primary-side drive to the primary coil of the transformer throughout each cycle of the PWM signal.

10. A power converter according to claim 1, arranged as a half-bridge converter in which the primary-side circuitry includes two power transistors in half-bridge arrangement to provide alternating positive and negative primary-side drive to the primary coil of the transformer in respective portions of each cycle of the PWM signal.

11. A power converter according to claim 1, arranged as a forward converter in which the primary-side circuitry includes a power transistor in a forward arrangement to provide a pulse of unipolar primary-side drive to the primary coil of the transformer in each cycle of the PWM signal.
